**Europäisches Patentamt**

**European Patent Office**

**Office européen des brevets**

(11) Numéro de publication : **0 333 244 B1**

(12) ## FASCICULE DE BREVET EUROPEEN

(45) Date de publication du fascicule du brevet :
**15.07.92 Bulletin 92/29**

(51) Int. Cl.⁵ : **G10K 11/16**

(21) Numéro de dépôt : **89200488.8**

(22) Date de dépôt : **28.02.89**

(54) **Revêtement insonore et/ou amortissant des vibrations, élément pourvu d'un tel revêtement et procédé d'application de cedernier.**

(30) Priorité : **10.03.88 BE 8800265**
**08.04.88 BE 8800397**

(43) Date de publication de la demande :
**20.09.89 Bulletin 89/38**

(45) Mention de la délivrance du brevet :
**15.07.92 Bulletin 92/29**

(84) Etats contractants désignés :
**AT BE CH DE ES FR GB GR IT LI LU NL SE**

(56) Documents cités :
**DE-B- 2 736 588**
**FR-A- 2 380 845**
**FR-A- 2 416 520**
**GB-A- 591 839**
**GB-A- 930 596**

(56) Documents cités :
**US-A- 3 496 973**
**US-A- 3 982 359**
**PATENT ABSTRACTS OF JAPAN, vol. 8, no. 9 (M-268)[1446], 14 janvier 1984, page 52 M 268; & JP-A-58 171 262 (TAMOTSU IDOTA)07-10-1983**

(73) Titulaire : "**EMIEL VANDERSTRAETEN**"
**Société de personnes à responsabilité limitée**
**Oude Brusselseweg 76**
**B-9219 Gent Gentbrugge (BE)**

(72) Inventeur : **Vanderstraeten, Johan**
**Gavergrachtstraat 18**
**B-9810 Drongen-Gent (BE)**

(74) Mandataire : **Callewaert, Jean**
**Bureau Callewaert p.v.b.a.**
**Brusselsesteenweg 108**
**B-1900 Overijse (BE)**

EP 0 333 244 B1

## Description

La présente invention est relative à un revêtement insonore et/ou amortissant des vibrations, destiné à être appliqué sur un élément pouvant être soumis à des vibrations, tel que lame de scie circulaire ou non, disque de polisseur, meule, haut-parleur, ainsi que paroi, caisson et châssis métalliques.

Les revêtements habituellement utilisées pour les lames ne présentent pas de propriétés amortissantes (voir par exemple US-A- 3496973).

Les revêtements insonores et/ou amortissant des vibrations généralement connus (voir par exemple JP-A-58 171 262) présentent l'inconvénient qu'ils sont soit très peu efficaces, soit seulement applicables sur des surfaces planes qui, de plus, ne peuvent être pratiquement soumises à aucune sollicitation.

Ceci est par exemple le cas pour des revêtements formés d'une feuille métallique fixée par une couche d'une matière visco-élastique sur une paroi à insonoriser.

Un des buts essentiels de la présente invention est de présenter un revêtement du type précité pouvant être utilisé dans des domaines extrêmement variés, avec une préférence, toutefois, pour des éléments métalliques dans lesquels des vibrations peuvent se propager très facilement et de ce fait être à l'origine de bruits très gênants.

Ce but est atteint en munissant l'élément d'un revêtement possédant les propriétés divulguées dans la partie caractérisante de la revendication 1.

L'invention concerne aussi un procédé pour l'application du revêtement précité sur un tel élément.

Ce procédé se distingue de l'art antérieur par le contenu de la partie caractérisante de la revendication 9.

D'autres détails et particularités de l'invention ressortiront de la description donnée, ci-après, à titre d'exemples non limitatifs, de quelques formes de réalisation particulières du revêtement et du procédé pour appliquer celui-ci sur des éléments à traiter.

La figure 1 est une vue de face d'une partie d'un élément, plus particulièrement d'une scie circulaire, pourvu d'un revêtement suivant l'invention.

La figure 2 est une représentation schématique d'une coupe transversale partielle suivant la ligne II-II de la figure 1.

La figure 3 est une coupe analogue à celle de la figure 2, montrant une variante particulière du revêtement suivant l'invention.

Dans ces figures, les mêmes chiffres de référence désignent des parties identiques.

Quoique le revêtement suivant l'invention puisse être appliqué sur tous types d'éléments dans lesquels des vibrations, sonores ou non, puissent se produire, tels que par exemple des éléments qui sont soumis à une rotation, translation ou mouvement combiné à des vitesses relativement importantes, pour illustrer l'invention, la description, donnée ci-après, sera limitée à un revêtement insonore prévu sur les faces d'une scie circulaire, qui est par exemple destinée à couper du béton ou de la pierre naturelle. Ceci constitue, en effet, une application particulièrement intéressante.

Suivant l'invention, l'élément est, d'une façon générale, caractérisé par le fait que son revêtement comprend une couche d'une substance relativement dure 2 présentant des interstices ou cavités 3 contenant une matière 4 qui présente une plus grande plasticité ou élasticité que la substance 2. Il faut, en fait, que la matière 4 soit sensiblement moins dure que la substance 2, tout en présentant une consistance suffisante pour pouvoir absorber de l'énergie de vibrations créées dans la couche de la substance 2. Ainsi, en principe, toutes les matières solides qui peuvent, d'une part, être introduites dans les cavités 3 prévues dans la couche de la substance 2 et, d'autre part, se déformer sous l'action de la substance 2 sont utilisables. Il s'agirait donc non seulement de matières plastiques, mais par exemple également de métaux relativement mous, présentant de préférence un point de fusion relativement bas.

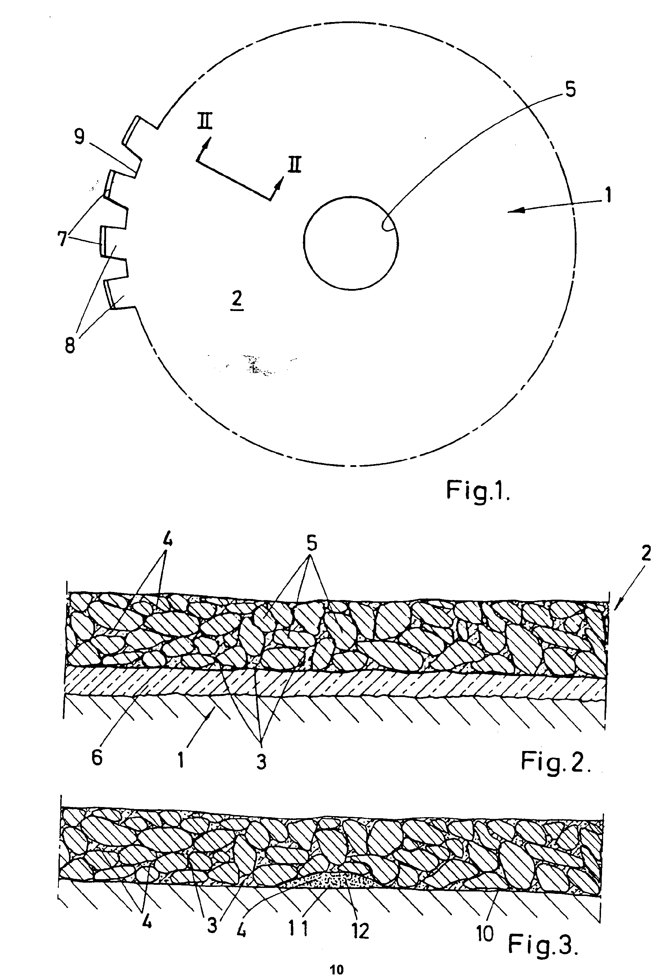

La figure 1 montre une scie circulaire dont les deux grandes faces 1 sont entièrement couvertes d'un tel revêtement.

Dans cette forme de réalisation, la couche de la substance 2 présente une structure à cellules ou pores ouvertes 3, dont la porosité est de préférence comprise entre 8 et 30 %.

En fait, il existe une relation entre l'état de la viscosité de la matière 4 au moment où cette dernière est appliquée sur la couche de la substance 2 et les dimensions des pores 3, puisqu'il il faut que cette matière puisse pénétrer facilement dans ces pores. Ainsi, si les pores sont relativement grandes, on peut faire usage d'une matière relativement visqueuse. Il peut e.a. s'agir d'une matière thermoplastique ou thermodurcissante. Dans le cas d'une matière thermoplastique, on peut introduire cette dernière dans les pores 3 à l'état fondu, où elle solidifie en se refroidissant. Dans le cas d'une matière thermodurcissante, on peut p.e. faire usage d'un mélange réactionnel à l'état liquide qui se polymérise à l'intérieur des pores.

Dans la forme de réalisation spécifique, qui est surtout illustrée par la figure 2, la couche de la substance relativement dure 2 est essentiellement constituée de particules 5 liées directement entre elles et ceci de manière à ce que des cavités 3 soient formées entre ces particules 5 et que, de plus, ces dernières puissent se déformer ou bouger quelque peu les unes par rapport aux autres sous l'effet de vibrations engendrées dans le revêtement. De cette manière, la forme et le volume des cavités 3, prévues entre ces particules, varient en fonction de ces vibrations autour d'une forme et volume déterminés qu'elles présentent lorsque la lame de scie est en position de repos.

Par ce mouvement relatif des particules, la matière 4 présentant une plus grande plasticité ou élasticité que la substance 2 subit alternativement une compression et une expansion, de sorte que l'énergie de vibration, qui est donc engendrée dans la substance 2, est transformée en énergie thermique à l'intérieur de la matière 4.

Les vibrations qui sont engendrées dans la lame de scie proviennent généralement du contact de cette dernière a vitesse relativement élevée avec un objet à scier, tel qu'un bloc de béton ou de pierre naturelle.

Il a été constaté que de très bons résultats sont obtenus lorsque la couche de la substance 2 est essentiellement formée par des grains ou particules ayant un diamètre moyen compris entre 50 et 150 microns.

Avantageusement, la couche de la substance 2 est essentiellement constituée de gouttelettes métalliques figées 5, qui sont soudées directement l'une à l'autre et qui sont formées par projection de métal liquide sur la surface à couvrir.

La dimension des pores, interstices ou cavités 3 est généralement de l'ordre de 30 microns, et varie, dans la plupart des cas, entre 10 et 60 microns. Une préférence est généralement donnée à une couche 2 dans laquelle les pores, interstices ou cavités 3 sont aussi nombreux que possible et sont répartis d'une manière aussi homogène que possible.

Dans certains cas, la couche de la substance 2 peut être formée par ou comprendre des fibres métalliques et/ou céramiques, par exemple, d'une longueur de 20 à 100 microns et d'un diamètre de 10 à 40 microns. Ces fibres sont mélangées statistiquement entre elles pour obtenir ainsi la porosité précitée et ceci d'une manière aussi homogène que possible.

La couche de substance 2 peut donc éventuellement être constituée d'un mélange de grains et de fibres.

Suivant une forme de réalisation particulièrement avantageuse de l'invention, la couche de la substance 2 est essentiellement constituée d'un métal ou d'un alliage résistant à l'usure, tel qu'un acier chrome-nickel.

Suivant la nature de la matière 4, on pourrait éventuellement, dans encore une autre forme de réalisation de l'invention, protéger la couche de la substance 2 par un produit présentant une très bonne résistance à l'usure, telle que du carbure de tungstène.

Des résultats très satisfaisants ont été obtenus lorsque la matière 4 est formée par une résine phénolique, connue en sol.

Il est évident qu'on peut faire usage d'autres matières plastiques qui présentent des propriétés élastiques ou plastiques et plus particulièrement, visco-élastiques ou visco-plastiques, telles que certaines résines époxy ou des polymères du type élastomère.

La couche de la substance 2 peut par ailleurs être fixée sur la surface à couvrir 1 de la lame de scie par l'intermédiaire d'une couche de fixation 6, qui contient de préférence du nickel-aluminium, du nickel-chrome, du molybdène ou des métaux équivalents, présentant de bonnes propriétés adhésives.

L'épaisseur de la couche de la substance 2 peut varier suivant le type d'élément, mais est en général comprise entre 0,1 et 0,4 mm et de préférence entre 0,2 et 0,3 mm. Cette épaisseur est fonction de la masse et plus particulièrement de l'épaisseur de l'élément et, pour ce qui concerne la lame de scie, également de l'épaisseur du bord de coupe 7, dont sont munies les dents 8 prévues sur la périphérie de la lame de scie. Il va bien entendu de soi que les propriétés amortissantes sont directement proportionnelles à l'épaisseur du revêtement, mais que généralement pour des raisons économiques on vise à obtenir un revêtement d'une épaisseur aussi réduite que possible. De plus, pour certaines applications, cette épaisseur peut varier d'un endroit à un autre, soit d'une manière continue soit d'une manière discontinue.

Dans d'autres cas encore, comme montré en coupe à la figure 3, la couche de la substance 2 est fixée sur la surface à couvrir en des zones déterminées 10 et est au moins partiellement libre ou détachée éventuellement par rapport à d'autres zones 11 de cette surface. Les zones 10 où cette fixation a lieu sont généralement formées par 75 à 95 % de la surface totale de la couche 2.

Dans les zones 11 où la couche de substance 2 n'adhère pas à la surface à couvrir, des creux 12 se forment qui sont alors remplis, de la même façon que les cavités 3, par la matière 4.

Ces zones 11 peuvent par exemple être formées en faisant usage d'un produit empêchant la fixation de la couche 2, telle qu'une fine couche de "Téflon", de l'alcool polyvinylique, de la résine époxy, combinée avec l'utilisation d'un écran.

Pour l'application du revêtement sur une surface à couvrir, telle que les faces latérales d'une lame de scie circulaire, on peut, suivant l'invention, procéder de la façon décrite ci-après.

Dans une première opération, on soumet la surface à couvrir à un traîtement connu en soi, appelé d'une façon générale "traitement de surface", qui a pour but de rendre cette surface ou au moins les zones de celle-ci auxquelles la couche de la substance 2 doit être fixée plus rugueuse, afin de permettre d'y créer une bonne adhérence durable de cette couche de substance 2.

Cette rugosité peut par exemple être obtenue par la projection de sable, formé p.e. de scories, d'oxyde d'aluminium etc..., dont la granulométrie est de préférence comprise entre 0,5 et 2,5 mm.

Une autre possibilité consiste à faire subir cette surface un traîtement chimique, par exemple au moyen d'un acide.

Dans une deuxième opération, on peut éventuellement appliquer la couche de fixation 6 telle que déjà décrite ci-dessus.

Dans une troisième opération, qui est l'opération la plus importante, on forme la couche de la substance 2, qui est généralement constituée par des métaux résistant à l'usure. Ceci a de préférence lieu par la projection de métal liquide à une vitesse bien déterminée sur la surface à couvrir.

A cet égard, on peut faire usage de techniques de métallisation connues en soi, à savoir la projection à l'arc ("arc spray"), la projection à la flamme ("flame spray"), la projection à plasma ("plasma spray"), la projection à plasma sous vide ("vacuum plasma spray"), soit à partir d'un fil métallique, soit à partir d'une poudre de métal, soit à partir de fibres etc...

Suivant l'invention, il peut être très important de contrôler minutieusement la température des gouttelettes de métal qui sont ainsi projetées sur la face de la lame de scie. Par un choix rigoureux de cette température, on peut veiller à ce que les gouttelettes soient suffisamment visqueuses pour pouvoir former sur la face 1 des particules distinctes, présentant de préférence des formes très irrégulières, dans la couche de la substance 2, de manière à obtenir ainsi une porosité maximale de cette couche avec une répartition sensiblement homogène de la porosité dans cette dernière.

Un autre paramètre est la distance entre la tête du pistolet, non représenté aux figures, et la surface à recouvrir et l'orientation ou la position de cette tête par rapport à cette surface.

Cette distance doit être telle que, lorsque les gouttelettes de métal fondu atteignent cette surface, celles-ci soient déjà partiellement figées et que leur énergie cinétique soit suffisamment réduite pour qu'elles subissent une déformation minimale au contact de la surface tout en assurant une adhérence suffisante à cette dernière et entre elles.

Dans une quatrième opération, la matière 4, qui est de préférence une matière visco-élastique ou visco-plastique, est introduite dans les cavités 3 de la couche de la substance relativement dure 2.

Ceci peut avoir lieu par imprégnation, plus particulièrement par imprégnation sous vide.

L'utilisation de cette dernière technique peut surtout être importante si les cavités sont formées par des pores relativement petits ou si la matière 2 présente une viscosité relativement grande.

Une autre technique consiste par exemple à projeter la matière visco-élastique à l'état suffisamment liquide sur la couche de la matière 2 pourqu'elle puisse y pénétrer.

Enfin, on pourrait également soumettre cette couche à un polissage après donc avoir introduit la matière 4 dans les pores de cette couche.

Dans une autre forme de réalisation du procédé suivant l'invention, la couche de la substance 2 peut être appliquée sous forme d'un alliage constitué par cette substance relativement dure et une autre substance qui peut être éliminée facilement par après par voie chimique.

Ainsi, par l'élimination de cette autre substance des gouttelettes figées sur la surface à couvrir de cet alliage, on peut obtenir ainsi une couche finale présentant des pores ou cavités relativement importantes qui peuvent alors être remplies par la matière 4.

Un tel alliage peut, par exemple, être formé par du fer et du cuivre, le cuivre pouvant alors être éliminé en le dissolvant dans un acide avant d'introduire la matière visco-élastique ou visco-plastique.

Ci-après sont donnés quelques exemples concrets permettant d'illustrer davantage l'objet de l'invention.

Exemple 1

Pour former la couche de la substance dure précitée, on fait usage d'un alliage présentant la composition suivante : Ni : 67% ; Cr : 17 %; Bo : 3 % ; Si : 3% ; C : 0,5% ; Mo : 4% ; Cu : 3% ; Fe : 2,5% Une couche de cet alliage, ayant un point de fusion de l'ordre de 1100°C, a été appliquée sur une plaque d'acier suivant la technique dite "flamespray", qui consiste à introduire cet alliage dans la flamme d'un pistolet alimenté par un mélange combustible d'acétylène et d'oxygène, dans des proportions bien déterminées permettant ainsi de mettre cet alliage en fusion et de le pulvériser par la flamme d'un pistolet sur la plaque d'acier. Dans cet exemple, cet alliage se présente sous forme d'une poudre avec une granulométrie moyenne de l'ordre de 150 microns. Celle-ci peut en général varier entre 100 et 200 microns. Le pistolet utilisé était un pistolet METCO, du type 5P. La distance de projection était de l'ordre de 60 cm. La position du débitmètre du pistolet était réglée sur 34 pour le gaz d'acétylène et pour le gaz d'oxygène. La couche dure et poreuse ainsi formée sur la plaque d'acier présentait une épaisseur de l'ordre de 0,2 mm, la porosité étant de l'ordre de 23 %. Après refroidissement de cette couche jusqu'à une température de l'ordre de 110 à 120°C, celle-ci à été imprégnée par une matière visco-élastique formée par une résine époxy connue sous le nom commercial "Araldit", type CY 221, qui est un produit de Ciba Geigy et qui atteint sa viscosité minimale à une température de l'ordre de 110 à 120°C.

Exemple 2

Dans cet exemple, la technique utilisée pour appliquer la couche de la substance relativement dure précitée sur un support, telle qu'une plaque d'acier, était la technique dite "arc spray". Cette technique consiste à former un arc électrique entre les extrémités de deux fils du métal, dont le support doit être recouvert, et de projeter le métal ainsi fondu par un courant d'air comprimé sur ce support. Le métal utilisé était un acier contenant 2,2 % de Mn, 1,9 % de Cr et 1,2 % de C, qui se présentait sous forme d'un fil d'un diamètre de 2 mm. Le courant électrique était de l'ordre de 400 Ampères. Le pistolet utilisé était du type 2 RG METCO. La pression de l'air à l'enbouchure était de 2 kg/cm². La distance de projection était de l'ordre de 80 cm. On obtenait une couche dure avec une porosité de l'ordre de 18 % et d'une épaisseur de l'ordre de 0,4 mm. Cette couche a ensuite été imprégnée sous vide par une résine phénolique de la société "Alterpaint".

Exemple 3

Dans cet exemple, la technique utilisée pour appliquer la couche de la substance relativement dure précitée sur un support, telle qu'une plaque de support, est la technique dite : "Plasma Spraying". Suivant cette technique, on forme un arc à plasma dans un gaz contenant 90 % d'argon et 10 % d'hydrogène. La substance dure utilisée était une céramique (87 % $Al_2O_3$ + 13 % $TiO_2$) et a été introduite dans ce plasma sous forme d'une poudre d'une granulométrie de l'ordre de 56 à 80 microns. Le courant électrique était de l'ordre de 500 ampère et la tension était de 60 volts.
On obtient une couche dure d'une épaisseur de l'ordre de 0,3 mm avec une porosité de l'ordre de 15 %. Cette couche a ensuite été imprégnée par un élastomère de polyuréthane, connu sous le nom commercial "Monotaan A80". Cet élastomère avait été préalablement porté à une température de l'ordre de 70°C pour faciliter sa pénétration dans la couche dure.

Il va bien entendu de soi que l'invention n'est pas limitée aux formes de réalisation décrites ci-dessus de l'invention et que, dans le cadre de cette dernière, plusieurs variantes pourraient être envisagées, entre autres en ce qui concerne le procédé appliqué pour former la couche dure présentant les cavités et/ou creux et celui pour introduire la matière élastique ou plastique dans ces cavités et/ou creux. De plus, la nature de cette dernière matière peut être très variée. Ceci est également valable pour la substance dont est formée la couche relativement dure.

Il est surtout important que la couche de la substance 2 forme une squelette suffisamment rigide qui présente une résistance mécanique suffisante, mais qui, en même temps, garde une certaine flexibilité sous l'action de vibrations engendrées dans le revêtement. De ceci résulte que les différentes particules doivent en quelque sorte être soudées l'une à l'autre et ne peuvent par exemple pas se trouver librement dans la matière visco-élastique ou visco-plastique du moins pour ce qui concerne la plupart des particules.

Par ailleurs, dans certains cas particuliers, on pourrait appliquer la matière visco-élastique ou visco-plastique simultanément avec la substance relativement dure sur la surface à couvrir.

Dans d'autres cas encore, on pourrait également former au moins une partie de la couche de la substance dure par électrolyse ou par la technique d'évaporation connue. Ceci pourrait, par exemple, être utile si des zones devaient être ménagées sur la surface à couvrir où la couche de la substance dure 2 n'est pas fixée sur cette surface, comme montré à la figure 3. Dans ce cas, on pourrait faire un premier dépôt mince de cette substance par électrolyse ou évaporation, suivi d'un second dépôt, par exemple, par une des techniques décrites ci-dessus, dont le rendement est sensiblement supérieur à celui par électrolyse ou évaporation.

Ainsi, d'une manière pratique, on applique par exemple sur les zones 11 de la surface à couvrir par le revêtement, suivant l'invention, une couche de la matière plastique ou élastique 4. Ensuite, on forme, par condensation d'un métal évaporé, un mince film de métal conducteur d'électricité sur cette surface, donc aussi bien sur la couche de matière 4 prévue sur les zones 11 que sur le restant de cette surface, c'est-à-dire les zones 10. Cette opération peut alors être suivie d'une électrolyse qui permet de déposer sur ledit métal conducteur une couche de la substance dure 2, cette dernière ne devant pas nécessairement inclure elle-même des cavités étant donné la présence des creux 12 préalablement formés à l'endroit des zones 11.

Le revêtement, suivant l'invention, se distingue surtout par rapport aux revêtements connus formés d'une substance dure et d'une matière élastique ou plastique, prévus par exemple aux dents d'un outil de coupe, par le fait que la substance dure forme une couche poreuse, de plusieurs niveaux superposés de particules, se présentant par exemple sous forme d'un squelette, dans lequel est incluse la matière élastique ou plastique, et/ou délimite sur la surface à couvrir des creux contenant la matière élastique ou plastique, alors que, dans ces revêtements connus, comme celui divulgué dans le brevet US-A 3496973 (Ballard) la substance dure est généralement formée par des particules dures et coupantes fixées rigidement l'une à l'autre dont uniquement les interstices dans la surface extérieure sont remplis par une matière anti-friction, ou encore par une couche métallique très dense dont la porosité ne dépasse généralement pas 1 à 2 % et qui est fixée rigidement sur toute la surface à couvrir.

Des matériaux poreux d'isolation acoustique composés de particules métalliques ont également été proposés, par exemple dans FR-A-2416520, mais ces matériaux sont inadaptés pour l'application aux dents d'un outil de coupe.

Il a été constaté que ces revêtements connus ne permettent pas d'amortir des vibrations sonores ou non.

Pour obtenir une couche de la substance dure 2 qui soit suffisamment poreuse, suivant l'invention, il pourrait être utile de former sur la surface à couvrir des particules avec une forme aussi irrégulière que possible. Par ailleurs, on a intérêt à utiliser une poudre de métal dans laquelle les variations internes de granulométrie soient aussi réduites que possibles. De plus, la façon dont le métal est projetée sur la surface à couvrir, telle que la distance de projection et l'angle d'inclinaison du pistolet, peut avoir une grande influence sur la structure de la couche de la substance dure 2.

Enfin, les métaux à projeter doivent de préférence présenter une dureté minimale pour permettre d'obtenir une porosité suffisante de la couche de la substance dure, de sorte que des métaux relativement mous et plastiques, tels que l'aluminium et le cuivre, pourraient nécessiter des précautions particulières ou l'application de la technique décrite ci-dessus en rapport avec la figure 3 pour former les creux entre la couche 2 et la surface à couvrir.

Si on fait usage de particules d'un produit relativement dur présentant un point de fusion élevé, tel que du carbure tungstène ou de la céramique associé ou non avec un autre métal, comme par exemple du cobalt, on pourrait leur faire subir une fusion superficielle avant de les appliquer sur la surface à couvrir, de manière à ce que ces particules puissent adhérer entre elles et sur ladite surface sans pratiquement se déformer.

Ainsi, des granules composées d'un noyau dur, tel que de l'acier, présentant par exemple un point de fusion de l'ordre de 1600°C, entouré d'une enveloppe d'une matière ayant un point de fusion plus bas, tel qu'un métal présentant un point de fusion par exemple de l'ordre de 1000°C pourraient parfaitement convenir pour réaliser le revêtement suivant l'invention. En effet, il suffit de porter ces granules à la température de fusion de la matière formant l'enveloppe lors de l'application à ces granules sur la surface à couvrir. La déformation des granules serait dans ce cas limitée à un minimum, de manière à former ainsi entre ceux-ci une porosité maximale. D'autres granules qui pourraient encore être utilisés sont ceux présentant un noyau en matière plastique ou élastique entouré d'une substance relativement dure, comme par exemple des granules comprenant un noyau de silicone entouré d'une poudre de métal, comme du nickel, ou des granules comprenant un noyau de polyester entouré d'un film métallique. Cette enveloppe extérieure pourrait ainsi fondre pour permettre de réunir ces granules entre eux sans même que des pores existent entre ces derniers, puisque dans un tel cas les pores se situent à l'intérieur des granules mêmes.

Une autre technique encore qui, suivant l'invention, pourrait convenir est la métallurgie des poudres qui consiste à presser et fritter à chaud des poudres métalliques sur la surface à couvrir, tout en veillant à obtenir une porosité suffisante de la couche ainsi formée.

Indépendamment du procédé appliqué, on constate généralement que de bons résultats d'amortissement des vibrations sont obtenus lorsque la couche de la substance dure précitée comprend plusieurs niveaux de particules, de manière à ce qu'ainsi les pores formés entre ces derniers s'étendent sensiblement uniformément suivant trois dimensions.

Une autre façon encore pour introduire la matière plastique ou élastique dans les pores de la couche de la substance dure consiste à faire usage de solutions, suspensions ou émulsions de cette matière, suivant laquelle on imprègne cette couche par ces liquides et on évapore ensuite le superflu de liquide pour obtenir la matière à l'état solide ou semi-solide dans les pores.

Enfin, le revêtement, suivant l'invention, notamment grâce à sa facilité d'application et son efficacité, même en épaisseur relativement réduite, peut en principe être appliqué sur toutes surfaces, aussi complexes soient-elles, d'éléments où des problèmes de vibrations se posent, telles que les outils de coupe, d'abrasion, etc..., des châssis métalliques de machines ou véhicules, des parois métalliques, comme la carrosserie d'automobiles, les ailettes des cylindres d'un moteur de moto, la partie métallique de haut-parleurs, etc...

La porosité de la couche dure, qui est généralement une caractéristique essentielle de l'invention, peut par exemple être mesurée par la technique connue dite "pesage hydrostatique".

## Revendications

1. Elément, de préférence élément métallique, muni d'un revêtement amortissant des vibrations constitué, d'une part d'une couche d'une substance relativement dure (2), formée de particules (5) par exemple d'un métal, d'un allaige, de carbures ou d'oxydes métalliques et d'autre part, d'une matière solide (4) ayant une plus grande plasticité ou élasticité que ladite substance (2), lesdites particules (5) étant constituées de goutelettes figées et liées de manière à former une structure à pores ouverts (3) remplis de la matière (4), l'élément étant caractérisé en ce que dans le revêtement

    (a) les particules (5) de la couche (2) sont soudées directement les unes aux autres de manière à ce que les pores puissent se déformer et/ou bouger quelque peu les uns par rapports aux autres sous l'effet des vibrations engendrées dans le revêtement en déformant la matière (4) et en ce que

(b) la porosité de la couche (2) est comprise entre 8 et 30 %, tandis que les goutelettes ont un diamètre moyen compris entre 50 et 150 microns, les pores (3) ayant un diamètre moyen de 10 à 60 microns et étant répartis d'une manière homogène dans lasite couche (2).

2. Elément suivant la revendication 1 caractérisé en ce que la couche précitée (2) est obtenue par projection d'un métal liquide, de préférence par la technique de la projection à la flamme de poudre de métal, appelée "flame-spray".

3. Elément suivant l'une quelconque des revendications 1 ou 2, caractérisé en ce que la couche précitée (2) comprend un métal ou un alliage résistant à l'usure.

4. Elément suivant l'une quelconque des revendications 1 à 3, caractérisé en ce que la matière précitée (4) est formée par une matière visco-élastique ou visco-plastique, notamment par une résine phénolique.

5. Elément suivant l'une quelconque des revendications 1 à 4, caractérisé en ce que l'épaisseur de la couche précitée (2) est comprise entre 0,1 et 0,4 mm, et de préférence entre 0,2 et 0,3 mm.

6. Elément suivant la revendication 1, caractérisé en ce que la couche précitée (2) est fixée rigidement sur la surface à couvrir de l'élément en des zones déterminées (10) et est au moins partiellement libre par rapport à d'autres zones (11) de cette surface.

7. Elément suivant la revendication 6, caractérisé en ce que les zones (10) où la couche (2) est fixée rigidement sur la surface à couvrir forment entre 75 et 95 % de la superficie de cette surface ou de celle de la couche (2).

8. Elément suivant l'une quelconque des revendications 6 ou 7, caractérisé en ce que la couche précitée (2) est fixée sur ladite surface à couvrir par l'intermédiaire d'une couche de fixation (6), qui contient de préférence du nickel-aluminium, du nikkel-chrome ou du molybdène.

9. Procédé pour l'application du revêtement suivant l'une quelconque des revendications 1 à 8 sur une surface à couvrir de l'élément, où l'on soumet la surface à couvrir de l'élément à un traitement de surface pour assurer l'adhérence de la couche de la substance relativement dure (2), l'on applique cette couche (2) sur la surface ainsi traitée par projection de cette substance à l'état au moins partiellement fondu et sous forme de gouttelettes, par exemple en faisant usage de techniques connues en soi, telles que "arc spray", "flame spray", "plasma spray" et "vacuum plasma spray", où l'on introduit la matière précitée (4) dans les cavités (3) formées entre les gouttelettes figées de cette substance (2), caractérisé en ce que l'on projette la substance précitée sur la surface à couvrir à partir d'une distance qui soit telle que, lorsque les gouttelettes atteignent cette surface, elles soient déjà partiellement figées et que leur énergie cinétique soit suffisamment réduite pourqu'elles subissent une déformation minimale au contact de la surface, tout en assurant une adhérence suffisante à cette dernière et entre elles de manière à former plusieurs niveaux superposés de particules, les pores formés entre ces derniers s'étendant uniformément suivant trois dimensions.

10. Procédé suivant la revendication 9, caractérisé en ce que l'on applique la couche précitée (2) sous forme d'un alliage d'un métal, formant la substance relativement dure, et d'une autre substance, pouvant être éliminé facilement par voie chimique, en ce que l'on élimine au moins partiellement cette autre substance en formant des cavités supplémentaires et en ce que l'on introduit ensuite la matière (4) dans l'ensemble des cavités (3).

11. Procédé suivant l'une quelconque des revendications 9 ou 10, caractérisé en ce que l'on introduit la matière précitée (4) dans les cavités (3) ménagées dans la couche relativement dure par imprégnation, plus particulièrement par imprégnation sous-vide.

## Patentansprüche

1. Bauteil, vorzugsweise Metallbauteil, versehen mit einer schwingungsdämpfenden Beschichtung, die , einerseits, von einer Schicht aus einem verhältnismässig harten Stoff (2) gebildet wird, der aus Teilchen (5) besteht, beispielsweise aus einem Metall, einer Legierung, aus Metallkarbiden oder Oxidkarniden, und andererseits, aus einem Festmaterial (4), das im Vergleich zum vorerwähnten Material (2) eine bessere Plastizität oder Elastizität aufzeigt, wobei die vorerwähnten Teilchen (5) aus Tröpfchen gebildet und so erstarrt und gebunden sind, dass sie einestruktur mit offenen Poren (3) darstellen, die mit dem Material (4) gefüllt wird, wobei das Bauteil dadurch gekennzeichnet ist, dass in der Beschichtung

(a), die Teilchen (5) der schicht (2) unmittelbar miteinander so verschweisst sind, dass die Poren sich untereinander, unter der Einwirkung der in der Beschichtung erzeugten Schwingungen, leicht verformen und/oder bewegen können und dabei das Material verformen , und dadurch, dass

(b), die Porosität der Schicht (2) zwischen 8 und 30 % liegt, während die Tröpfchen einen mittleren Durchmesser zwischen 50 und 150 Mikron aufzeigen und homogen in der vorerwähnten Schicht (2) verteilt sind.

2. Bauteil gemäss Anspruch 1, dadurch gekennzeichnet, dass die vorerwähnte schicht (2) durch Aufspritzen eines Flüssigmetalls gebildet wird, vorzugsweise anhand der Technik des Flammenmetallspritzverfahrens ("Flame-spray").

3. Bauteil gemäss einem beliebigen der Ansprüche 1 oder 2, dadurch gekennzeichnet, dass die vorerwähnte Schicht (2) ein verschleissfestes Metall oder eine verschleissfeste Legierung umfasst.

4. Bauteil gemäss einem beliebigen der Ansprüche 1 bis 3, dadurch gekennzeichnet, dass das vorerwähnte Material (4) aus einem viscoelastischen oder viscoplastischen Material, insbesondere aus einem Phenolharz besteht.

5. Bauteil gemäss einem beliebigen der Ansprüche 1 bis 4, dadurch gekennzeichnet, dass die Dicke der vorerwähnten Schicht (2) zwischen 0,1 und 0,4 mm, vorzugsweise zwischen 0,2 und 0,3 mm liegt.

6. Bauteil gemäss Anspruch 1, dadurch gekennzeichnet, dass die vorerwähnte Schicht (2) starr an der zu beschichtenden Oberfläche des Bauteils und in bestimmten Bereichen (10) befestigt und zumindest teilweise im Verhältnis zu anderen Bereichen (11) dieser Oberfläche unbefestigt ist.

7. Bauteil gemäss Anspruch 6, dadurch gekennzeichnet, dass die Bereiche (10), in denen die Schicht (2) starr an der zu beschichtenden Oberfläche befestigt ist, zwischen 75 bis 95 % des Flächeninhalts dieser Oberfläche oder der Schicht (2) darstellen.

8. Bauteil gemäss einem beliebigen der Ansprüche 6 oder 7, dadurch gekennzeichnet, dass die vorerwähnte schicht (2) an der vorerwähnten und zu beschichtenende Oberfläche mit der Hilfe einer Befestigungsschicht (6) befestigt wird, die vorzugsweise Aluminiumnickel, Chromnickel oder Molybdän enthält.

9. Verfahren zur Anbringung der Beschichtung gemäss einem beliebigen der Ansprüche 1 bis 8, an einer mit dem Bauteil zu beschichtenden Oberfläche, wobei die mit dem Bauteil zu beschichtende. Oberfläche einer Oberflächenbehandlung unterzogen wird, um die Haftung der Schicht aus verhältnismässig hartem Stoff (2) zu gewährleisten, wobei diese Schicht (2) an der so behandelten Oberfläche durch Aufspritzen dieses ,in einem zumindest teilweise geschmolzenen Zustand und in Tröpfchenform befindlichen Stoffs aufgetragen wird, beispielsweise unter Zuhilfenahme von an sich bekannten technischen Verfahren wie "Arc Spray", "Flame Spray", "Plasma Spray" und "Vacuum Plasma Spray", wobei das vorerwähnte Material (4) in die Hohlräume (3) eingebracht wird, die zwischen den erstarrten Tröpfchen dieses Stoffs (2) bestehen, dadurch gekennzeichnet, dass der vorerwähnte Stoff auf die zu beschichtende Oberfläche aus einer Entfernung gespritzt wird, die so bemessen ist, dass die Tröpfchen beim Erreichen dieser Oberfläche bereits erstarrt sind und ihre kinetische Energie soweit verringert worden ist, dass sie bei der Berührung mit der Oberfläche eine minimale Verformung erleiden aber gleichzeitig eine ausreichende Haftung an dieser Oberfläche und untereinander bewerkstelligen, so dass mehrere übereinander aufgebrachte Teilchenlagen gebildet werden, wobei die zwischen den letzteren gebildeten Poren sich einheitlich entsprechend drei Dimensionen erstrecken.

10. Verfahren gemäss Anspruch 9, dadurch gekennzeichnet, dass man die vorerwähnte Schicht (2) in der Form einer Legierung aus einem Metall aufbringt, das von dem verhältnismässig harten Stoff gebildet wrird, und aus einem anderen Stoff, der leicht auf chemi schem Wege ausgeschieden werden kann, dass man diesen anderen Stoff zumindest teilweise ausscheidet und so zusätzliche Hohlräume bildet und dass man anschliessend das Material (4) in die Gesamtheit der Hohlräume (3) einbringt.

11. Verfahren gemäss einem beliebigen der Ansprüche 9 oder 10, dadurch gekennzeichnet, dass man das vorerwähnte Material (4) in die Hohlräume (3) einbringt, die in der verhältnismässig harten schicht durch Imprägnierung, insbesondere durch Vakuumimprägnierung ausgespart werden.

## Claims

1. Element, preferably metallic element, provided with a vibration-damping coating formed, at the one hand, of a layer of a relatively hard substance (2) of particles (5) f.i. of a metal, an alloy, of carbides or of metallic oxides, and, on the other hand, of a solid material (4) having a higher plasticity or elasticity than said substance (2), said particles (5) being formedOof solidified droplets and being bonded together so as to form an open-pore structure (3) containing the material (4), this element being characterized in that in the coating :

   a) the particles (5) of the layer (2) are directly bonded to each other so that the pores may deform and/or move to some extend with respect to each other under the effect of the vibrations generated in the coating by detorming the material (4), and in that

   b) the porosity of the layer (2) is comprised between 8 and 30%, while the droplets have a mean diameter ranging from 50 to 150 microns, the pores (3) having a mean diameter ranging from 10 to 60 microns and being distributed homogenously through said layer (2).

2. Element as claimed in claim 1, characterized in that said layer (2) is obtained by projection of a liquid metal, preferably by the flame projection technique of metal powders, called "flame spray".

3. Element as claimed in any of claim 1 or 2, characterized in that said layer (2) comprises a wear-resisting metal or alloy.

4. Element as claimed in any of claims 1 to 3, characterized in that said material (4) is formed of a visco-elastic or visco-plastic material, in particular a phenol resin.

5. Element as claimed in any claims 1 to 4, characterized in that the thickness of said layer (2) is comprised between 0.1 and 0.4 mm, preferably between 0.2 and 0.3 mm.

6. Element as claimed in claim 1, characterized in that said layer (2) is rigidly fixed to the surface to be covered of the element at the location of determined areas (10) and is at least partly free with respect to other areas (11) of this surface.

7. Element as claimed in claim 6, characterized in that the areas (10) where layer (2) is rigidly fixed to the surface to be covered constitute between 75 and 95% of the area of this surface or of the layer (2).

8. Element as claimed in claim 6 or 7, characterized in that said layer (2) is fixed to this surface to be covered by means of a fixing layer (6) which preferably contains nickel-aluminium, nickel-chrome or molybdenum.

9. A process for applying a coating as claimed in any of claims 1 to 8 to a surface to be covered of the element, wherein to the surface to be covered of the element a surface treatment is applied to ensure the adhesion of the layer of relatively hard substance (2), this layer (2) is applied to the so treated surface by projection of this substance in the at least partly molten state and as droplets, for example, by using known per se techniques, such as arc spray, flame spray, plasma spray, vacuum plasma spray, where the said material (4) is entered into the cavities (3) formed between coagulated droplets of said substance (2), characterized in that said substance is projected into the surface to be covered from a distance which is such that, when the droplets reach said surface, they are already partly coagulated, and that their kinetic energy is reduced enough in order that said droplets undergo a minimum deformation when contacting the surface, while ensuring a sufficient adhesion to the latter and to each other, so as to form different superimposed levels of particles, the pores formed between the latter extending uniformly according to three dimensions

10. Process as claimed in claim 9, characterized in that said layer (2) is applied on an alloy of a metal, forming the relatively hard substance, and of another substance, which can be easily eliminated chemically, this other substance is at least partly eliminated by forming additional cavities, and then the material (4) is entered into the cavity assembly (3).

11. Process as claimed in claim 9 or 10, characterized in that said material (4) is entered into the cavities (3) provided in the relatively hard layer by impregnation, more particularly by vacuum impregnation.

Fig.1.

Fig.2.

Fig.3.